(19) Europäisches Patentamt
European Patent Office
Office européen des brevets

(11) Veröffentlichungsnummer: 0 329 850
A2

(12) # EUROPÄISCHE PATENTANMELDUNG

(21) Anmeldenummer: 88121472.0

(22) Anmeldetag: 22.12.88

(51) Int. Cl.4: C08K 5/37 , C08K 5/00 , C08L 27/06 , //(C08K5/00, 5:09,5:37)

(30) Priorität: 26.02.88 DE 3806094

(43) Veröffentlichungstag der Anmeldung: 30.08.89 Patentblatt 89/35

(84) Benannte Vertragsstaaten: BE DE FR GB IT LU NL SE

(71) Anmelder: HÜLS AKTIENGESELLSCHAFT
Patentabteilung / PB 15 - Postfach 13 20
D-4370 Marl 1(DE)

(72) Erfinder: Hildebrand, Thomas, Dr.
Konradstrasse 28
D-4600 Dortmund(DE)
Erfinder: Kemper, Bruno, Dr.
Haardweg 4
D-4358 Haltern(DE)

(54) **Stabilisatormischung für Formmassen auf der Basis von Polymerisaten des Vinylchlorids, deren Verwendung sowie die Formmassen.**

(57) Die bisher bekannten physiologisch einwandfreien Stabilisatorsysteme haben noch den Nachteil eines unangenehmen Geruchs, sowie einer unzureichenden Anfangs-Stabilität.

Es werden neben physiologisch einwandfreien Primärstabilisatoren, wie Metallseifen, Salzen aromatischer Carbonsäuren oder Metallphenolaten als Costabilisatoren Derivate von Salicylsäureestern eingesetzt, die an der Mercaptogruppe durch Monothioacetalbildung maskiert sind.

Einsatzgebiet ist Hart- und Weich-Polyvinylchlorid.

EP 0 329 850 A2

# Stabilisatormischung für Formmassen auf der Basis von Polymerisaten des Vinylchlorids, deren Verwendung sowie die Formmassen

Die Erfindung betrifft harte oder weichgestellte, stabilisierte thermoplastische Formmassen auf Basis von Polyvinylchlorid oder im wesentlichen Vinylchlorid enthaltenden Polymerisaten.

Es ist bekannt, daß chlorhaltige Polymerisate durch die Einwirkung von Wärme, z. B. bei der Verarbeitung, leicht einen Abbau erleiden, der zu unerwünschten Verfärbungen und zu einer Beeinträchtigung der mechanischen Eigenschaften führt. Zur Vermeidung dieses Abbaus werden daher den Polymerisaten vor der Verarbeitung Stabilisatoren zugesetzt. Für Polyvinylchlorid und im wesentlichen Vinylchlorid enthaltende Mischpolymerisate verwendet man als Stabilisatoren vor allem Organozinnverbindungen, anorganische und organische Bleisalze, organische Antimonverbindungen oder Kombinationen aus Cadmium- und Bariumcarboxylaten. Diesen sogenannten Primärstabilisatoren werden häufig zur Verbesserung ihrer Wirksamkeit Costabilisatoren zugesetzt. Die Wirkungsweise von Primär- oder Costabilisatoren bzw. ihr Zusammenwirken (Synergismus) ist in der einschlägigen Literatur beschrieben, z. B. in der Publikation von L.I. Nass, "Heat Stabilizers" in Kirk-Othmer Encyclopedia of Chemical Technology, Band 12, 3. Auflage, S. 225, Verlag John Wiley and Sons, 1980.

Die beschriebenen Stabilisatoren zeigen zwar eine ausreichende Wirksamkeit, jedoch sind Blei-, Antimon- und Cadmiumverbindungen aufgrund ihrer Toxizität nicht in allen Bereichen einsetzbar, besonders nicht in Verpackungsmaterialien für Nahrungsmittel oder im medizinischen Sektor. Organozinnverbindungen, von denen viele toxikologisch unbedenklich sind, eignen sich nicht für eine breite Anwendung, da sie zu teuer, d. h. schwer zugänglich bzw. nur in aufwendiger Weise herstellbar sind.

Es besteht daher ein Bedarf an Stabilisatorsystemen, die aus physiologisch unbedenklichen und preisgünstigen bzw. leicht zugänglichen Komponenten bestehen. Eine Möglichkeit bietet zwar der Einsatz von fett- Costabilisatoren, wie Epoxyverbindungen, organischen Phosphiten, mehrwertigen Alkoholen oder 1,3-Diketonen ergänzt werden. Der Nachteil dieser Stabilisiersysteme liegt jedoch in der unzureichenden Langzeitstabilität und/oder der unbefriedigenden Anfangsfarbe der Polymermasse. Costabilisatoren für Stabilisatorsysteme auf Zinkbasis, die die Anfangs- und die Langzeitwirkung der Primärstabilisatoren verbessern, sind Thioacetale und Monothioacetale (DE-OS 35 42 862). Die nachteilige Eigenschaft dieser Verbindungen ist zum einen der unangenehme Geruch und zum anderen die unzureichende Anfangsfarbe der Polymermasse (vgl. Tabelle 2).

Diese Nachteile des Standes der Technik wurden überwunden durch die Bereitstellung und Verwendung einer Stabilisatormischung zur Stabilisierung von Formmassen auf der Basis von Polymerisaten des Vinylchlorids, die wenigstens einen Primärstabilisator und als Costabilisator eine Verbindung der Formel I enthalten,

I

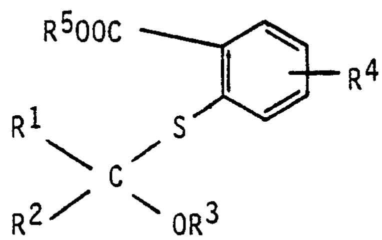

in der $R^1$ und $R^2$ gleich oder verschieden sein können und für geradkettige oder verzweigte Alkyl- oder Alkenylgruppen mit 1 bis 20, vorzugsweise 1 bis 10 Kohlenstoffatomen stehen, oder in der $R^1$ für Wasserstoff oder einen Arylrest steht, der ggf. substituiert ist, und $R^2$ eine geradkettige oder verzweigte Alkyl- oder Alkenylgruppe mit 1 bis 20, vorzugsweise 1 bis 10 Kohlenstoffatomen bedeutet,
$R^3$ und $R^5$ gleich oder verschieden sein können und geradkettige oder verzweigte Alkylgruppen mit 1 bis 22, vorzugsweise 4 bis 10 Kohlenstoffatomen bedeuten und
$R^4$ für geradkettige oder verzweigte Alkyl- oder Alkenylgruppen mit 1 bis 22, vorzugsweise 1 bis 10 Kohlenstoffatomen sowie substituierte bzw. unsubstituierte Arylgruppen oder Wasserstoff steht. Die Arylgruppen sind insbesondere Phenylgruppen.

Durch die Verwendung der erfindungsgemäßen Stabilisatormischung erhält man Formmassen auf der Basis von Polymerisaten des Vinylchlorids, die wenigstens einen Primärstabilisator und als Costabilisator eine Verbindung der Formel I enthalten,

I

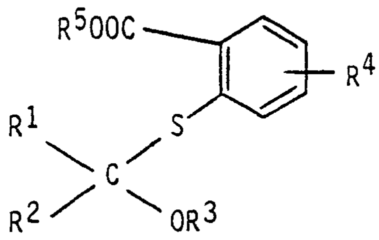

in der $R^1$ und $R^2$ gleich oder verschieden sein können und für geradkettige oder verzweigte Alkyl- oder Alkenylgruppen mit 1 bis 20, vorzugsweise 1 bis 10 Kohlenstoffatomen stehen, oder in der $R^1$ für Wasserstoff oder einen Arylrest steht, der ggf. substituiert ist, und $R^2$ eine geradkettige oder verzweigte Alkyl- oder Alkenylgruppe mit 1 bis 20, vorzugsweise 1 bis 10 Kohlenstoffatomen bedeutet,
$R^3$ und $R^5$ gleich oder verschieden sein können und geradkettige oder verzweigte Alkylgruppen mit 1 bis 22, vorzugsweise 4 bis 10 Kohlenstoffatomen bedeuten und
$R^4$ für geradkettige oder verzweigte Alkyl- oder Alkenylgruppen mit 1 bis 22, vorzugsweise 1 bis 10 Kohlenstoffatomen sowie substituierte bzw. unsubstituierte Arylgruppen oder Wasserstoff steht.

Bevorzugt sind auch solche stabilisierten Formmassen, bei denen $R^1$, $R^2$ und $R^5$ geradkettige oder verzweigte Alkylreste mit 1 bis 20 Kohlenstoffatomen, $R^3$ geradkettige oder verzweigte Alkylgruppen mit 4 bis 20 Kohlenstoffatomen und $R^4$ Wasserstoff bedeuten.

Die stabilisierten Formmassen enthalten als Primärstabilisator in bevorzugter Ausführungsform wenigstens ein fettsaures Salz von Calcium oder Zink. Sie können ggf. Gleitmittel und andere übliche Verarbeitungshilfsmittel enthalten.

In der Formel 1 können $R^1$, $R^2$, $R^3$, $R^4$ und $R^5$ eine Butyl-, Isobutyl-, Pentyl-, Isopentyl-, Hexyl-, Isohexyl-, Heptyl-, Isoheptyl-, Octyl-, Isooctyl-, Nonyl-, Isononyl-, Decyl-, Isodecyl-, Dodecyl-, Isodode cyl-, Tridecyl-, Tetradecyl-, Hexadecyl-, Octadecyl oder Arachinylgruppe darstellen.

$R^1$, $R^2$, $R^3$, $R^4$ und $R^5$ können außerdem die Methyl-, Ethyl-, Propyl-oder Isopropylgruppe bedeuten und $R^3$ kann z. B. auch für den Behenylrest stehen. $R^1$, $R^2$ und $R^4$ können auch einen Propenyl-, Butenyl-, Pentenyl-, Hexenyl-, Heptenyl-, Octenyl-, Nonenyl-, Decenyl-, Dodecenyl-, Tetradecenyl-, Hexadecenyl oder Octadecenylrest darstellen.

Ferner können $R^1$ und $R^2$ auch für ggf. substituierte Arylgruppen stehen, wie beispielsweise die Phenyl-, o-Tolyl-, m-Tolyl-, p-Tolyl-, p-tert.Butylphenyl-, p-Nonylphenyl-, p-Dodecylphenyl-, o-Hydroxyphenyl-, m-Hydroxyphenyl-, p-Hydroxyphenyl-, o-Chlorphenyl-, m-Chlorphenyl- oder die p-Chlorphenylgruppe.

Die erfindungsgemäßen stabilisierten Formmassen auf der Basis von Polymerisaten des Vinylchlorids enthalten als Costabilisatoren Derivate der Thiosalicylsäureester, die an der Mercaptogruppe durch Monothioacetalbildung maskiert sind. Diese Costabilisatoren zeigen nicht den Nachteil eines unangenehmen Geruchs. Dabei wurde beobachtet, daß diese Verbindungen die stabilisierende Wirkung von fettsauren Salzen von Zink und Calcium in nicht vorhersehbarem Maß verstärken. Der positive Einfluß der Monothioacetale von Thiosalicylsäureestern äußert sich in einer merklichen Verbesserung der Anfangsfarbe.

Bei den Polymerisaten des Vinylchlorids, welche die Basis der erfindungsgemäßen stabilisierten Formmassen bilden, handelt es sich um Polyvinylchlorid oder Mischpolymerisate des Vinylchlorids, welche durch die bekannten Methoden hergestellt werden können, wie sie beispielsweise in der Monographie von Kainer, Polyvinylchlorid und Vinylchlorid-Mischpolymerisate (1965), Springer-Verlag, auf den Seiten 7 bis 59 beschrieben werden (Masse-, Suspensions- oder Emulsionspolymerisation). Die Mischpolymeren können bis zu 30 Gew.-% an Comonomeren, wie z. B. Vinylacetat, Vinylidenchlorid, Vinylether, Arcrylnitril, Acrylsäureester, Maleinsäure-mono- oder -diester oder Olefine enthalten. Es lassen sich auch Propfpolymerisate einsetzen, deren Herstellung z. B. in o. a. Monographie von Kainer auf den Seiten 111 bis 114 beschrieben wird.

Die Verbindungen der Formel I können mit den gängigen Methoden der organischen Synthese hergestellt werden, wie sie z. B. in Houben-Weyl, Methoden der organischen Chemie, Bd. 9, (1955), beschrieben sind. Vorzugsweise werden Verbindungen der Formel I beispielsweise durch sauer bzw. basisch katalysierte Addition von Thiosalicylsäureestern an offenkettige Enolether aliphatischer Carbonylverbindungen hergestellt.

Die in der Formel I beschriebenen Monothioacetale werden beispielsweise durch Umsetzung von Thiosalicylsäureester mit Enolethern wie Isobutylvinylether, Tridecylvinylether, Hexadecylvinylether, Octadecylvinylether unter Säurekatalyse hergestellt.

Als Thiosalicylsäurederivat werden vorzugsweise der Butylester, 2-Ethylhexylester oder der Methylester eingesetzt.
Ein geeignetes Herstellungsverfahren ist im experimentellen Teil beschrieben.

Der Formel I entsprechende Verbindungen können beispielsweise sein:

1) S-(1-Isobutyloxyethyl)-thiosalicylsäuremethylester
2) S-(1-Isobutyloxyethyl)-thiosalicylsäurebutylester
3) S-(1-Isobutyloxyethyl)-thiosalicylsäure-2-ethylhexylester
4) S-(1-Ethoxyethyl)-thiosalicylsäuremethylester
5) S-(1-Ethoxyethyl)-thiosalicylsäurebutylester
6) S-(1-Ethoxyethyl)-thiosalicylsäure-2-ethylhexylester
7) S-(1-Octadecyloxyethyl)-thiosalicylsäuremethylester
8) S-(1-Octadecyloxyethyl)-thiosalicylsäurebutylester
9) S-(1-Octadecyloxyethyl)-thiosalicylsäure-2-ethylhexylester
10) S-(1-Butyltriglykoloxyethyl)-thiosalicylsäuremethylester
11) S-(1-Butyltriglykoloxyethyl)-thiosalicylsäurebutylester
12) S-(1-Butyltriglykoloxyethyl)-thiosalicylsäure-2-ethylhexylester
13) S-(1-Nonyloxyethyl)-thiosalicylsäuremethylester
14) S-(1-Nonyloxyethyl)-thiosalicylsäurebutylester
15) S-(1-Nonyloxyethyl)-thiosalicylsäure-2-ethylhexylester
16) S-(1-Tridecyloxyethyl)-thiosalicylsäuremethylester
17) S-(1-Tridecyloxyethyl)-thiosalicylsäurebutylester
18) S-(1-Tridecyloxyethyl)-thiosalicylsäure-2-ethylhexylester

In den erfindungsgemäßen stabilisierten Formmassen können als Primärstabilisatoren die üblichen Verbindungen eingesetzt werden, wie beispielsweise Metallseifen, Salze aromatischer Carbonsäuren und/oder Metallphenolate.

Als Metallseifen zu nennen sind vorzugsweise fettsaure Salze von Calcium, Barium oder Zink, die sich von Fettsäuren mit 8 bis 36, vorzugsweise 8 bis 22 Kohlenstoffatomen ableiten. Insbesondere kommen hier Caprylate, Caprinate, Laurate, Myristate, Palmitate, Stearate und Behenate in Frage. Ebenfalls sind verwendbar die Salze von verzweigten Fettsäuren wie 2-Ethylhexansäure, 2-Octyldecansäure oder Tetradecyloctadecansäure oder auch Hydroxyfettsäuren wie 9(10)-Hydroxystearinsäure oder 9,10-Dihydroxystearinsäure. Die Metallseifen können aus den Salzen einzelner Fettsäuren oder auch von Fettsäuregemischen, wie sie aus natürlichen Fetten gewonnen werden, bestehen. Als Salze aromatischer Carbonsäuren kommen besonders die Calcium-, Barium- und Zinksalze der Benzoesäure und der substituierten Benzoesäureester, insbesondere der alkylsubstituierten Benzoesäuren in Betracht. Als Phenolate lassen sich einsetzten: Methylphenolate, tert.-Butylphenolate, Nonylphenolate, Dodecylphenolate oder Naphtenate des Calciums, Bariums oder Zinks.

In der Regel enthalten die stabilisierten Formmassen auf 100 Teile Polymerisat 0,02 bis 2, vorzugsweise 0,05 bis 0,5 Gewichtsteile Verbindungen der Formel I. Die Primärstabilisatoren können in Mengen von 0,05 bis 5, vorzugsweise 0,1 bis 2 Gewichtsteilen pro 100 Gewichtsteile Polymerisat enthalten sein. Vorzugsweise enthalten die erfindungsgemäßen Formmassen auf 100 Teile Polymerisat 0,1 bis 3 Gewichtsteile Calciumseife und/oder 0,1 bis 3 Gewichtsteile Bariumseife und/oder 0,1 bis 3 Gewichtsteile Zinkseife. Die Seifen leiten sich vorzugsweise von Fettsäuren mit 8 bis 22 Kohlenstoffatomen ab und sind zusammen i. a. zu nicht mehr als 3 Gewichtsteilen in 100 Gewichtsteilen Polymerisat enthalten.

Die Herstellung der erfindungsgemäßen stabilisierten Formmassen kann durch übliche Methoden, z. B. durch einfaches mechanisches Vermischen der Komponenten in konventionellen Mischern erfolgen. Bei diesem Mischvorgang können weitere übliche Verarbeitungshilfsmittel eingearbeitet werden, wie z. B. Gleitmittel (Montanwachse oder Polyolpartialester), Weichmacher, Füllstoffe, Lichtstabilisatoren oder weitere Costabilisatoren, wie z. B. epoxidierte Fettsäureester, Polyole, Phosphite (bevorzugt Alkyl-Arylphosphite) oder 1,3-Diketone. Die homogene Verteilung der Stabilisatoren im PVC kann z. B. mit Hilfe eines Zweiwalzenmischers bei 150 bis 200 °C erfolgen. Zur weiteren Erläuterung der Erfindung und zum Nachweis des überraschenden technischen Fortschritts dient das im folgenden beschriebene Beispiel:

## Herstellung der Verbindungen der Formel I

93,3 g (0,35 Mol) Thiosalicylsäure-2-ethylhexylester wurden in 300 ml getrocknetem MTB-Ether gelöst und mit 10 Tropfen konzentrierter Schwefelsäure versetzt. Unter Rühren wurde eine Lösung aus 38,6 g

(0,39 Mol) Isobutylvinylether (frisch destilliert) in 300 ml trockenem MTB-Ether innerhalb 170 Minuten bei Raumtemperatur zugetropft und 60 Minuten bei Raumtemperatur gerührt. Die Reaktionsmischung wurde mit zweimal 100 ml 3prozentiger Natriumhydrogencarbonatlösung gewaschen und die organische Phase mit Natriumsulfat getrocknet. Das Trockenmittel wurde abfiltriert und das Filtrat im Vakuum (ca. 0,4 mbar) von flüchtigen Bestandteilen befreit. Nach GC enthielt der Rückstand 93,8 % Monothioacetal und 6,2 % Thiosalicylsäureethylhexylester. Zur Reinigung wurde die Lösung adsorptiv filtriert (SC: 1. Schicht = 122 g $Al_2O_3$ (neutr.) Akt. III; 2. Schicht = 129 g $Al_2O_3$ (neutr.) Akt. III und 5,3 g Aktivkohle; Laufmittel = ca. 300 ml Diethylether). Nach dem Abdestillieren des Lösungsmittels erhielt man 116 g, 99,3prozentigen S-(1-Isobutyloxyethyl)-thiosalicylsäure-2-ethylhexylester als farbloses Öl.

Das gleiche Verfahren läßt sich unter identischen Bedingungen auf die Addition anderer Thiosalicylsäureester an andere Vinylether übertragen.

Herstellung und Prüfung der Walzfelle

Die Wirkung der Stabilisatorkombinationen wurde durch Bestimmung der statischen Thermostabilität von Walzfellen geprüft. Hierzu wurden die Stabilisatorkombinationen und ggf. Weichmacher und Verarbeitungshilfsmittel mit Polyvinylchlorid 30 Sekunden lang in einer Labormühle gemischt und anschließend auf einem Doppelwalzwerk bei einer Walztemperatur von 170 °C im Gleichlauf im Verlauf von 5 Minuten zu 1 mm starken Walzfellen verarbeitet. Aus den Walzfellen wurden Streifen der Dimension 10 x 250 mm geschnitten, die anschließend in einem speziellen Ofen (Metrastat Typ Sigma) bei 180 °C thermisch belastet wurden. Die Probestreifen werden dabei kontinuierlich aus der Heizzone ausgefahren und zeigen durch die Farbveränderung die Wirkung der Stabilisatoren.

Aus folgenden Bestandteilen wurden Mischungen zusammengestellt (GT = Gewichtsteile):

Mischung A:

- 100 GT Suspensions-Polyvinylchlorid (K-Wert 70; VESTOLIT ®S 7054; Hüls AG, Marl)
- 30 GT Dioctylphthalat
- 0,5 GT Zinkstearat
- 1,0 GT Calciumstearat
- 0,2 GT Costabilisator

Mischung B:

- 100 GT Suspensions-Polyvinylchlorid (K-Wert 70; VESTOLIT S 7054; Hüls AG, Marl)
- 30 GT Dioctylphthalat
- 0,3 GT Zinkstearat
- 0,6 GT Bariumstearat
- 0,2 GT Costabilisator

Zur Herstellung der erfindungsgemäßen Polyvinylchlorid-Formmassen wurden die Mischungen A und B mit folgenden Costabilisatoren getestet.

1 = S-(1-Isobutyloxyethyl)-thiosalicylsäuremethylester
2 = S-(1-Octadecyloxyethyl)-thiosalicylsäuremethylester
3 = S-(1-Isobutyloxyethyl)-thiosalicylsäure-2-ethylhexylester
4 = S-(1-Isobutyloxyethyl)-thiosalicylsäurebutylester
5 = S-(1-Butyltriglykoloxyethyl)-thiosalicylsäurebutylester

Die Mischungen A und B wurden in der angegebenen Weise zu Probestreifen verarbeitet.

Die Tabelle gibt die Zeiten (in Minuten) an, bei denen die erste Verfärbung der Streifen bei 180 °C und der Stabilitätsabbruch (Schwarzfärbung) eintraten.

Tabelle 1

| | | 1 | 2 | 3 | 4 | 5 |
|---|---|---|---|---|---|---|
| erste Verfärbung | A | 40 | 40 | 40 | 40 | 40 |
| Stabilitätsabbruch | | 50 | 65 | 65 | 60 | 65 |
| erste Verfärbung | B | 55 | 55 | 60 | 50 | 50 |
| Stabilitätsabbruch | | 65 | 65 | 70 | 65 | 65 |

Es wurden folgende Vergleichsversuche gegenüber dem mit DE-OS 35 42 862 gegebenen relevanten Stand der Technik durchgeführt:

Der jeweils entsprechende Verlauf der Verfärbung der Probestreifen während der thermischen Belastung ist abgeschätzt entsprechend der folgenden Skala:

0 1 2 3 4 5 6 7 8 9 10

farblos gelb orange schwarz

Tabelle 2

| Costabilisatoren/Mischung | Belastung bei 180 °C in Minuten | | | | | | | |
|---|---|---|---|---|---|---|---|---|
| | 0 | 10 | 20 | 30 | 40 | 50 | 60 | 70 |
| | Farbe | | | | | | | |
| 6/A z. Vgl. (DE-OS 35 42 862) | 1 | 2 | 2 | 2 | 2 | 3 | 4 | 9 |
| 3/A erfindungsgemäß | 0 | 0 | 0 | 0 | 1 | 2 | 9 | 10 |
| 6/B z. Vgl. (DE-OS 35 42 862) | 2 | 4 | 4 | 4 | 3 | 3 | 4 | 10 |
| 3/B erfindungsgemäß | 0 | 0 | 0 | 0 | 0 | 0 | 0 | 10 |
| Costabilisator 6 = S-(1-Isobutyloxyethyl)-thioglykolsäure-2-ethylhexylester. | | | | | | | | |

## Ansprüche

1. Stabilisatormischungen für Formmassen auf der Basis von Polymerisaten des Vinylchlorids, die wenigstens einen Primärstabilisator und als Costabilisator eine Verbindung der Formel I enthalten,

I 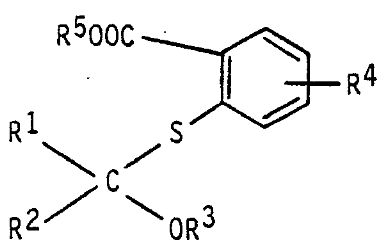

in der $R^1$ und $R^2$ gleich oder verschieden sein können und für geradkettige oder verzweigte Alkyl- oder Alkenylgruppen mit 1 bis 20 Kohlenstoffatomen stehen, oder in der $R^1$ für Wasserstoff oder einen Arylrest steht, der ggf. substituiert ist, und $R^2$ eine geradkettige oder verzweigte Alkyl- oder Alkenylgruppe mit 1 bis 20, vorzugsweise 1 bis 10 Kohlenstoffatomen bedeutet,

$R^3$ und $R^5$ gleich oder verschieden sein können und geradkettige oder verzweigte Alkylgruppen mit 1 bis 22 Kohlenstoffatomen bedeuten und
$R^4$ für geradkettige oder verzweigte Alkyl- oder Alkenylgruppen mit 1 bis 22 Kohlenstoffatomen, sowie substituierte bzw. unsubstituierte Arylgruppen oder Wasserstoff steht.

2. Verwendung der Stabilisatormischungen nach Anspruch 1 zur Stabilisierung von Formmassen auf der Basis von Polymerisaten des Vinylchlorids.

3. Stabilisierte Formmassen auf der Basis von Polymerisaten des Vinylchlorids, die wenigstens einen Primärstabilisator und als Costabilisator eine Verbindung der Formel I enthalten;

I

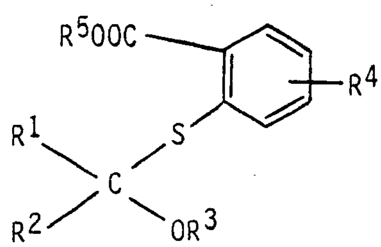

in der $R^1$ und $R^2$ gleich oder verschieden sein können und für geradkettige oder verzweigte Alkyl- oder Alkenylgruppen mit 1 bis 20 Kohlenstoffatomen stehen, oder in der $R^1$ für Wasserstoff oder einen Arylrest steht, der ggf. substituiert ist, und $R^2$ eine geradkettige oder verzweigte Alkyl- oder Alkenylgruppe mit 1 bis 20, vorzugsweise 1 bis 10 Kohlenstoffatomen bedeutet,
$R^3$ und $R^5$ gleich oder verschieden sein können und geradkettige oder verzweigte Alkylgruppen mit 1 bis 22 Kohlenstoffatomen bedeuten und
$R^4$ für geradkettige oder verzweigte Alkyl- oder Alkenylgruppen mit 1 bis 22 Kohlenstoffatomen sowie substituierte bzw. unsubstituierte Arylgruppen oder Wasserstoff stehen.

4. Stabilisierte Formmassen nach Anspruch 3,
dadurch gekennzeichnet,
daß in der Formel I
$R^1$ und $R^2$ für geradkettige oder verzweigte Alkyl- oder Alkenylgruppen mit 1 bis 10 Kohlenstoffatomen, und
$R^3$ und $R^5$ für geradkettige oder verzweigte Alkylgruppen mit 4 bis 10 Kohlenstoffatomen stehen.

5. Stabilisierte Formmassen nach Anspruch 4,
dadurch gekennzeichnet,
daß in der Formel I
$R^1$, $R^2$ und $R^5$ geradkettige oder verzweigte Alkylreste mit 1 bis 20 Kohlenstoffatomen,
$R^3$ geradkettige oder verzweigte Alkylreste mit 4 bis 20 Kohlenstoffatomen, und
$R^4$ Wasserstoff bedeuten.

6. Stabilisierte Formmassen nach einem der Ansprüche 3 bis 5,
dadurch gekennzeichnet,
daß sie als Primärstabilisator wenigstens ein fettsaures Salz von Ca oder Zn enthalten.

7. Verfahren zur Herstellung eines Costabilisators der Formel I

I

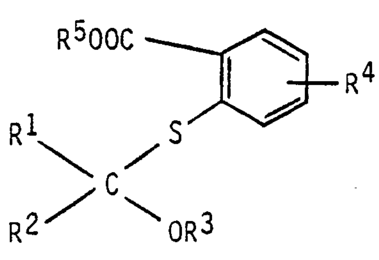

in der $R^1$ und $R^2$ gleich oder verschieden sein können und für geradkettige oder verzweigte Alkyl- oder Alkenylgruppen mit 1 bis 20 Kohlenstoffatomen stehen, oder in der $R^1$ für Wasserstoff oder einen Arylrest steht, der ggf. substituiert ist, und $R^2$ eine geradkettige oder verzweigte Alkyl- oder Alkenylgruppe mit 1 bis 20, vorzugsweise 1 bis 10 Kohlenstoffatomen bedeutet.

8. Verwendung eines Costabilisators der Formel 1

I

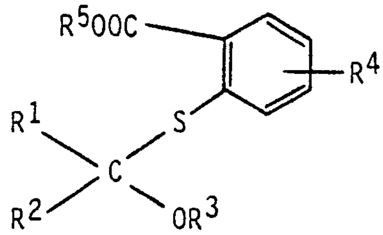

in der $R^1$ und $R^2$ gleich oder verschieden sein können und für geradkettige oder verzweigte Alkyl- oder Alkenylgruppen mit 1 bis 20 Kohlenstoffatomen stehen, oder in der $R^1$ für Wasserstoff oder einen Arylrest steht, der ggf. substituiert ist, und $R^2$ eine geradkettige oder verzweigte Alkyl- oder Alkenylgruppe mit 1 bis 20, vorzugsweise 1 bis 10 Kohlenstoffatomen bedeutet,
als Stabilisatormischung mit einem Primärstabilisator für Formmassen auf der Basis von Polymerisaten des Vinylchlorids.